# EUROPEAN PATENT APPLICATION

(11) **EP 4 821 820 A1**
(43) Date of publication of application: **14.10.2026**
(21) Application number: 26171215.2
(22) Date of filing: 08.04.2026
(51) Int. Cl.: B64D 11/06, A47D 9/00, B60N 2/28

(54) **BASSINET FOR AIRCRAFT**

(30) Priority: 08.04.2025 US 202563785488 P
(71) Applicant: Tulmar Safety Systems Inc., Hawkesbury, ON K6A 2B8 (CA)
(72) Inventor: CORBEIL, Benoit, Quebec (CA); BRUNET, Étienne, Ontario (CA)
(74) Representative: AOMB Polska Sp. z.o.o.

(57) **Abstract**

A bassinet for aircraft is disclosed. The bassinet includes a frame having a first frame component for connecting to an interior wall of the aircraft, and a second frame component movably connected to the first frame component for moving the second frame component between a folded position proximal to the first frame component and a deployed position distal from the first frame component. The second frame component includes one or more portions that, when the second frame component is in the deployed position, are substantially at a same level as one or more portions of the first frame component with respect to a floor of the aircraft, and a basket for connecting to the first and second frame components.

## Description

### FIELD

The present disclosure relates generally to a bassinet for aircraft. Specifically, the present disclosure relates to a bassinet for aircraft that may be folded and/or collapsed.

### BACKGROUND

Bassinets may be connected to an aircraft wall, bulkhead, etc. so that travelers with children under the age of two and below a specified weight have a place to safely keep their child during airplane travel, instead of holding the child.

### SUMMARY

Embodiments of a bassinet for an aircraft are disclosed herein. The bassinet may be connected to a wall or bulkhead of an aircraft, for example to the wall facing a front row of a section of seating in the cabin. The bassinet, once connected to the wall, may provide a place for an infant, baby or the like to sleep or lie down as well as to be secured, since they are not yet able to occupy a seat. It may also relieve an adult from having to hold the child.

The bassinet according to embodiments of the present disclosure is configured to be transitioned between deployed, folded and collapsed positions. The deployed position is the position for use in which, for example, a baby or infant may be placed in the bassinet. If the bassinet is not being actively used, it may be folded to take up less space. In some embodiments, it may also be collapsed (e.g. shortened) independently or in addition to being folded. When folded and collapsed, the bassinet takes up even less space, for example for stowing. Being foldable and/or collapsible may also aid in meeting safety guidelines and requirements.

In some embodiments the bassinet also includes a canopy that can cover the bassinet and is also collapsible.

Folded in the context of the present disclosure means that the bassinet can be configured (e.g. moved, adjusted, set) between a folded position and a deployed position. The folded position includes the bassinet occupying less space, for example, by protruding less from the wall to which it is attached. Collapsed in the context of the present disclosure means that the bassinet can be configured (e.g. moved, adjusted, set) between an uncollapsed and collapsed position. The collapsed position includes the bassinet occupying less space, for example, by being less wide.

The bassinet may be kept in the folded and/or collapsed positions until needed and then deployed into the deployed position for use.

The bassinet may be locked in the deployed position to prevent unintended folding and/or collapse and *vice versa.*

According to some embodiments of the present disclosure, the bassinet includes a frame comprised of multiple frame components. A first frame component is configured for connecting to the aircraft, for example a wall at the front of an aircraft cabin. A second frame component is movably connected to the first frame component. The second frame component can be moved towards and away from the first frame component in order to fold the bassinet.

The first frame component may include multiple sub-frame components that can move, for example slide, relative to each other in a direction generally parallel to the wall to which the bassinet is attached in order to shorten the length of the first frame component in order to collapse the bassinet. Similarly, the second frame component may include multiple sub-frame components that can move, for example slide, relative to each other in the direction generally parallel to the wall in order to shorten the length of the second frame component in order to collapse the bassinet.

Moving the second frame component towards the first frame component and/or reducing the length may allow the overall length, width and/or depth of the bassinet to be reduced.

In some embodiments, a basket made of a pliable material is connected to the frame components in order to form a basket of the bassinet. The basket material is pliable so that as the frame components are configured in order to fold and/or collapse the bassinet, the basket can fold and/or collapse as well.

The bassinet may include a canopy. The canopy comprises a pliable material attached to a canopy frame. The canopy frame may be movable, e.g. hingedly, connected to the first and/or second frame components. The canopy frame may also be configured to have sub-components that are able to move, for example slide, with respect to each other so as to reduce the length of the canopy in the same direction as the first and second frame components.

A mattress, including a harness, may be placed into the basket. The child may be placed onto the mattress and secured with the harness. When the basket is empty and the bassinet is folded, the mattress may remain in the basket and be positioned generally parallel to the wall to which the bassinet is attached. In some embodiments, the mattress may be compressed, folded, etc. when the bassinet is collapsed.

In some embodiments, the mattress can be adjusted from a flat position in the deployed bassinet to a reclined position within the deployed bassinet. In some embodiments, the basket includes transverse webbing or straps running underneath the basket, connected to the basket at opposite ends of the strap. The transverse webbing or straps may be positioned symmetrically on opposite ends of the basket since the mattress direction may be reversed. One or more of the straps may be capable of being shortened, thereby folding or scrunching the material of the basket. This may aid in raising up the portion of the mattress over the shortened strap, allowing one to also raise the portion of the child, e.g. its head, over that part of the mattress.

What has been described is merely illustrative of the application of principles of embodiments of the present disclosure. Other embodiments, arrangements and methods can be implemented by those skilled in the art without departing from the scope of the present invention.

### BRIEF DESCRIPTION OF THE DRAWINGS

The following detailed description of illustrative embodiments of the present disclosure, will be better understood when read in conjunction with the appended drawings.

For the purposes of illustrating the present disclosure, there is shown in the drawings illustrative embodiments of the disclosure. It should be understood, however, that the disclosure is not limited to the precise arrangements and instrumentalities shown. In the drawings:
Fig. 1 is a perspective view of an embodiment of a bassinet according to the present disclosure.
Fig. 2 is a perspective view of an embodiment of a frame thereof, shown in isolation.
Fig. 3 is a front view thereof.
Fig. 4 is a left side view thereof.
Fig. 5 is a bottom view thereof.
Fig. 6 is a perspective view of the bassinet in a folded and collapsed position.
Fig. 7 is a perspective view of the bassinet with a canopy according to on embodiment of the present disclosure.
Fig. 8 is a perspective view thereof with the canopy closed.
Fig. 9 is a perspective view of a frame of a bassinet in a deployed position according to further embodiments of the present disclosure.
Fig. 10 is a perspective view thereof in a folded position.
   Fig. 11 is a perspective view thereof in the folded and collapsed position.

### DETAILED DESCRIPTION

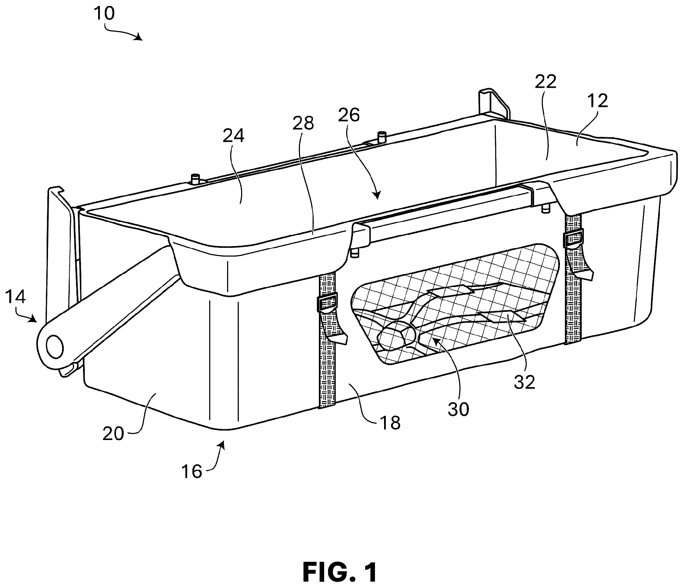

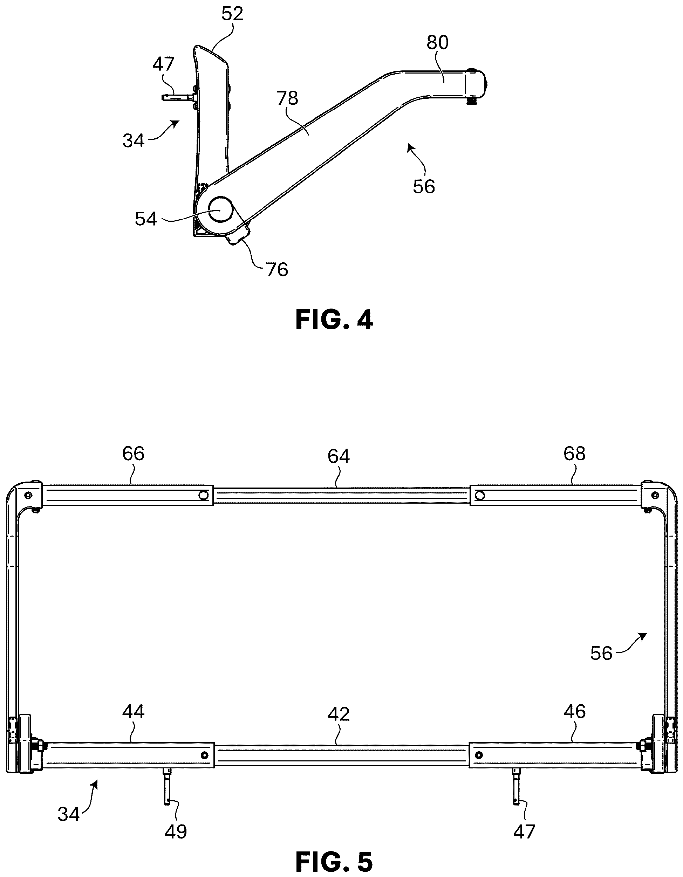

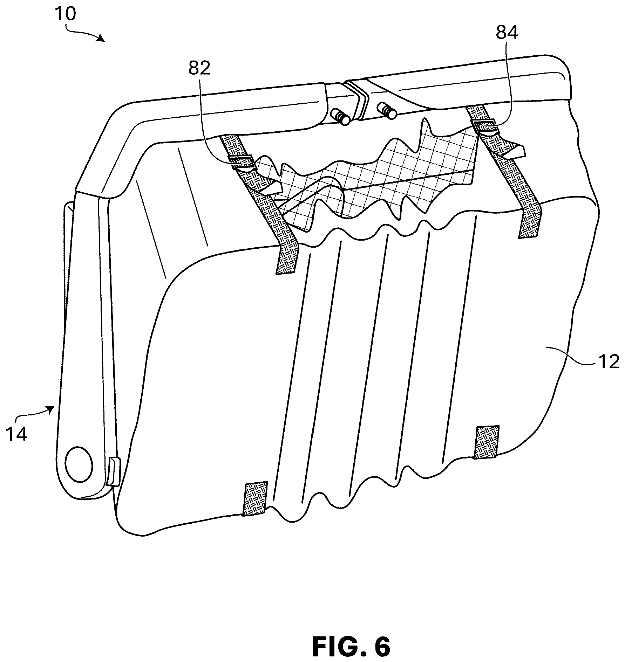

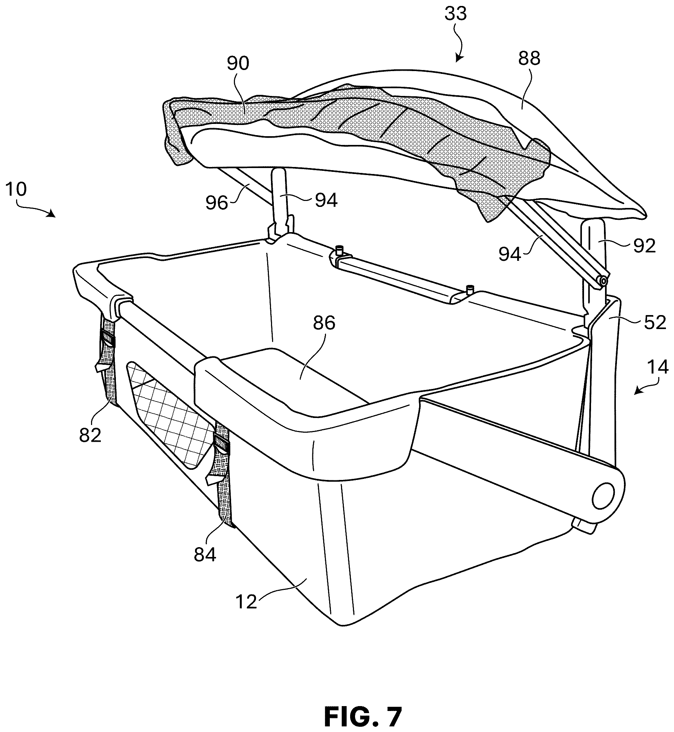

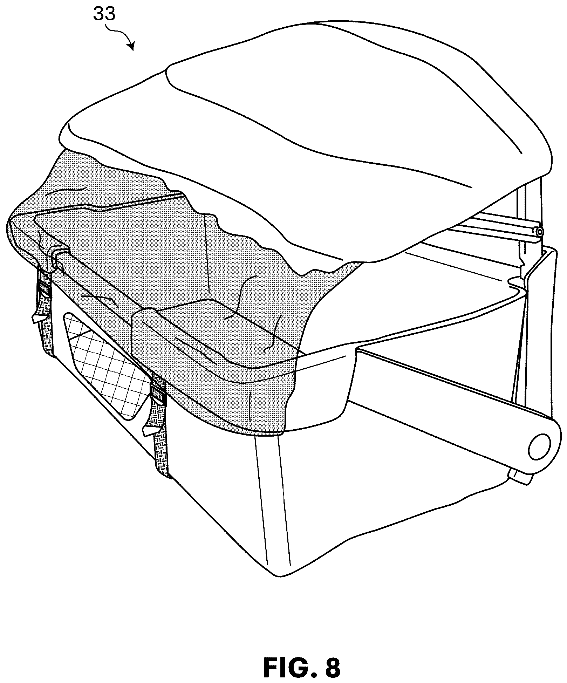

Referring to Figs. 1 to 8, a bassinet according to embodiments of the present disclosure will be described in more detail.

A bassinet 10 includes a basket 12 connected to a frame 14 of the bassinet 10. The basket 12 is generally rectangular and has a bottom 16, a front wall 18, a first side wall 20, an opposing second side wall 22, and a rear wall 24, the walls 18, 20, 22 and 24 extending up from the bottom 16 to form the basket 12 with an open top 26. A top edge or top portion 28 of the basket 12 rests on and/or is attached to the frame 14 so that the basket 12 is supported by the frame 14.

In other embodiments, the shape of the basket may be different than shown. In some embodiments, the basket may be connected to the frame in another manner. In some embodiments, there may be multiple points of attachment between the basket and the frame, including at the top portion and/or other portions.

The basket 12 may be comprised of a material that can be deformed, e.g. is pliable, such as canvass and/or cloth. In some embodiments, only a part of the top portion 28 of the basket 12 is used to connect to the frame 14. For example, in some embodiments, only sections of the top portion 28 extend over and/or around portions of the frame 14 and are then secured, e.g. using buttons, hook and loop fasteners, or other fasteners, to the frame 14.

A window 30 with a mesh 32 in the front wall 18 of the basket 12 may be included to allow for viewing and air flow into the basket. In some embodiments, there are multiple windows.

In some embodiments, the bassinet 10 may include a canopy 33 that is sized and dimensioned to fully or partially cover the open top 26 of the basket 12.

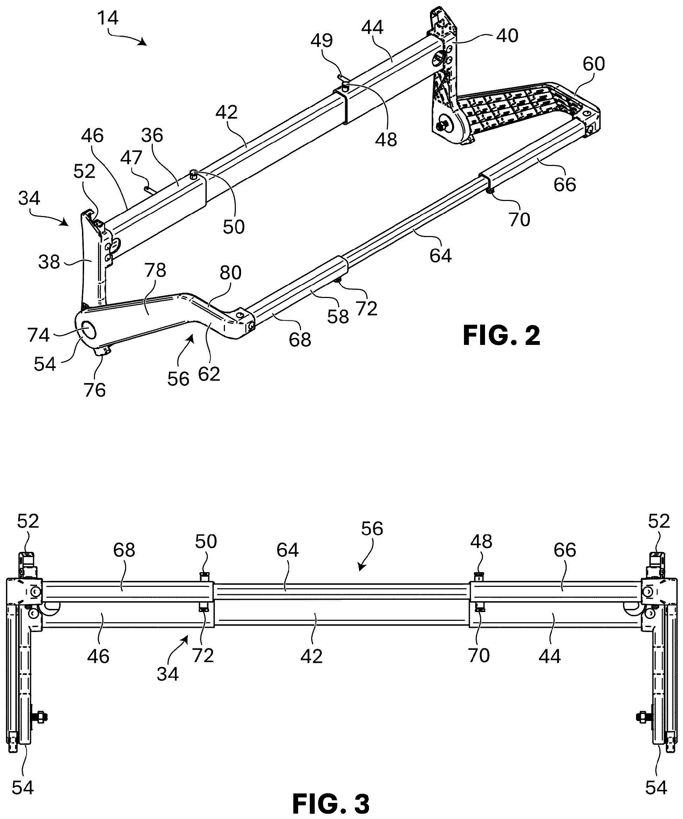

Referring to Fig. 2, one embodiment of the frame 14 is shown in isolation. The frame 14 includes a first frame component 34 having a generally U-shaped body with a center bracket or cross-bar 36 and opposing end brackets 38, 40 that are connected to opposing ends of the cross-bar 36.

The cross-bar 36 is comprised of a central bar 42 and end bars 44, 46 that are positioned on opposing ends of the central bar 42. The end bars 44, 46 are configured to be movably, for example slidingly, engaged on the central bar 42. In the illustrated embodiment, the end bars 44, 46 can slide on the central bar 42 from a position at the ends of the central bar 42 towards the center of the central bar 42. In the embodiment shown, the central bar 42 is received within each end bar 44, 46 when these are slid towards the center of the central bar 42.

By moving the end bars 44, 46 towards a center of the central bar 42, the first frame component 34 may have its length shortened or reduced.

In the embodiment shown, the cross-bar 36 includes means 47, 49 for releasably connecting the cross-bar 36 and thus the bassinet 10 to an interior wall in an aircraft, such as a bulk head, for mounting the bassinet. In the embodiment shown, the means 47, 49 are configured as pins with heads (not shown). The heads are positioned and retained within the respective end bars 44, 46 and the pins protrude from a slot or opening in the end bars 44, 46. Thus, when the end bars 44, 46 are slid and receive the central bar 42, the end bars 44, 46 also slide with respect to the pins if they are stationary and installed in a wall of the aircraft. The slot or opening is long enough to accommodate the entire range of motion of the pin with respect to the end bars 44, 46.

In the embodiment shown, spring loaded stops 48, 50 on the central bar 42 engage with respective openings in the end bars 44, 46 to set the end bars 44, 46 in their end position. By depressing the stops 48, 50 the end bars 44, 46 are released and permitted to slide inwards. Conversely, the stops 48, 50 automatically lock in place when the end pieces are moved away from each other to their maximum position and the respective openings line up with the spring loaded stops 48, 50.

Other configurations of the first frame component are possible. For example, how the cross-bar is configured to shorten and/or how the end bars move with respect to the central bar may be configured different in other embodiments according to the present disclosure.

In the illustrated embodiment, each end bracket 38, 40 includes a connection portion 52 at a top end thereof and a hinge portion 54 at a bottom end thereof, distal from where the end bracket connects to the cross-bar 36. The connection portion 52 allows for connection of the canopy 32.

The frame 14 includes a second frame component 56, which is movably, for example hingedly, connected to the first frame component 34. The second frame component 56 may be moved relative to the first frame component 34 from a deployed position, in which the second frame component 56 is distal from the first frame component 34, to a folded position, in which the second frame component 56 is proximal to the first frame component 34.

In the illustrated embodiment, the second frame component 56 includes a cross-bar 58 and opposing arms 60, 62 at opposing ends of the cross-bar 56. The cross-bar 58 includes a central bar 64 and end bars 66, 68 at opposing ends of the central bar 64 that are configured to be movably, e.g. slidingly, engaged with the central bar 64. In the illustrated embodiment, the end bars 66, 68 can slide on the central bar 64 from a position at the end towards the center of the central bar 64. In the embodiment shown, the central bar 64 is received within each end bar 66, 68 when these are slid towards the center of the central bar 64.

By moving the end bars 66, 68 towards a center of the central bar 64, the length of the second frame component 56 may be reduced or shortened. In some embodiments, such as the embodiment shown, the end bars 66,68 and end bars 44, 46 must be moved in conjunction with each other so that the front and back of bassinet cannot be shortened independently of each other. By shortening the length of cross-bars 36 and 58, the bassinet may be collapsed into a collapsed position.

In the embodiment shown, spring loaded stops 70, 72 on the central bar 64 engage with respective openings in the end bars 66, 68 to set the end bars 66, 68 in their end position. By depressing the stops 70, 72 the end bars 66, 68 are released and permitted to slide inwards. Conversely, the stops 70, 72 automatically lock in place when the end pieces are moved away from each other to their maximum position and the respective openings line up with the spring loaded stops 70, 72.

Other configurations of the second frame component are possible. For example, how the cross-bars are configured to shorten and/or how the end bars move with respect to the central bar may be configured different in other embodiments according to the present disclosure.

Each opposing arm 60, 62 is configured to connect to and hinge about a respective hinge portion 54 of the first frame component 34. A respective lock 74, such as a spring-loaded stop, on each hinge portion 54 locks into place when the second frame component 56 has reached the deployed position and can be disengaged in order to move the second frame component 56 with respect to the first frame component 34. For example, the lock 74 may have a stop 76 that is depressed to release it and permit movement of the second frame component 56. Other configurations are possible.

In the illustrated embodiment, each of the arms 60, 62 has an angled portion 78 extending from the hinge portion 54 at an upward angle and a horizontal portion 80 extending from the angled portion 78 generally parallel to an expected ground, i.e. a floor of the aircraft, when the bassinet 10 is installed in the aircraft.

In the illustrated embodiment, the first frame component 34 and the second frame component 56 cooperate and are configured so that, when the second frame component 56 is moved to the deployed position the cross-bar 58 and the horizontal portions 80 of the arms 60, 62 are generally parallel to and substantially at the same level as the cross-bar 36 of the first frame component 34, thereby forming opposing, front and rear sides of the frame to allow for a level basket 12.

More generally, the bassinet is configured so that when the second frame component is in the deployed position and installed on the wall of the aircraft a level edge of the frame is provided relative to a floor of the aircraft for connecting the basket.

For example, the second frame components includes one or more portions that, when in the deployed position, are at substantially the same level relative to a floor of the aircraft as one or more portions of the first frame component.

In the illustrated embodiment, the first frame component 34 and the second frame component 56 are configured such that in the folded position the angled portion 78 of each of the arms 60, 62 extends generally upwards from the respective hinge portion 54. The lock 74 may be configured to also lock in the fully folded position in order to keep the bassinet 10 in the folded position, requiring user intervention to deploy the bassinet 10.

In the illustrated embodiment, the bassinet 10 includes length adjustable straps 82, 84 positioned equidistant from the first and second sidewalls 20, 22 of the basket 12. The straps 82, 84 are configured so that when their length is shortened, the material of the basket is bunched, causing a mattress 86 that may be placed in the basket 12 to be raised. The mattress 86 may further include a five-point harness to secure the baby in either direction. The mattress 86 may be reversible to orient the child with its head at the opposite end of the bassinet.

In some embodiments, a canopy 33 may be attached to the frame 14 to provide a cover for the basket 12. The canopy 32 may be configurable into both a deployed position and a folded position. In particular, the canopy 32 may include a canopy body 88 supported by a support element 90. The support element 90 may be connected to the frame 14, for example at each connection portion 52 in the illustrated embodiment, using vertical supports 92, 94. The support element 90 may include arms 96, 98 that are movably, for example hingedly, connected to the vertical supports 92, 94, respectively. This may allow the support element 90 to be moved between folded and deployed positions. Other configurations are also possible. The canopy body 88 may be configured to be able to extend and attach to one or both of the frame 14 and basket 12. For example, in the illustrated embodiment, canopy body 88 can be stretched from the deployed position to extend over a portion of the frame 14. In some embodiment, attachment means such as buttons, snaps or hook and loop fasteners might be used.

In operation, the bassinet 10 may be folded, i.e. moved into the folded position, by moving the second frame component 56 towards the first frame component 34 and *vice versa.* For example, the second frame component 56 may be hinged towards the first frame component 34 and then locked into the folded position. Before or after folding the bassinet, each of the frame components 56, 34 may be reduced in size to further reduce the space occupied by the bassinet 10, i.e. may be collapsed into a collapsed position. For example, each of the frame components may be shortened in its length. Thus, in some embodiments of the present disclosure, moving the bassinet into the folded position may be completed independently of collapsing the bassinet, i.e. by reducing the size, e.g. shortening, of one or both frame components. **If** a mattress is present, the mattress may need to be collapsed or folded prior to folding and/or collapsing the bassinet.

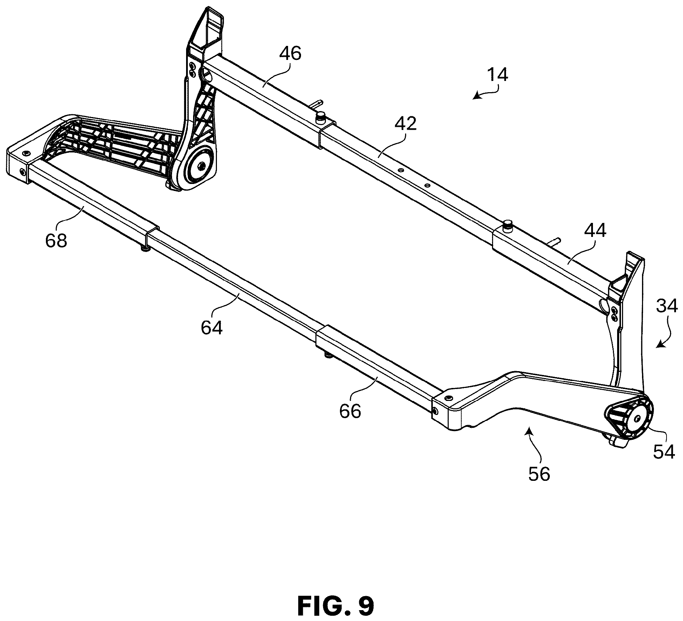

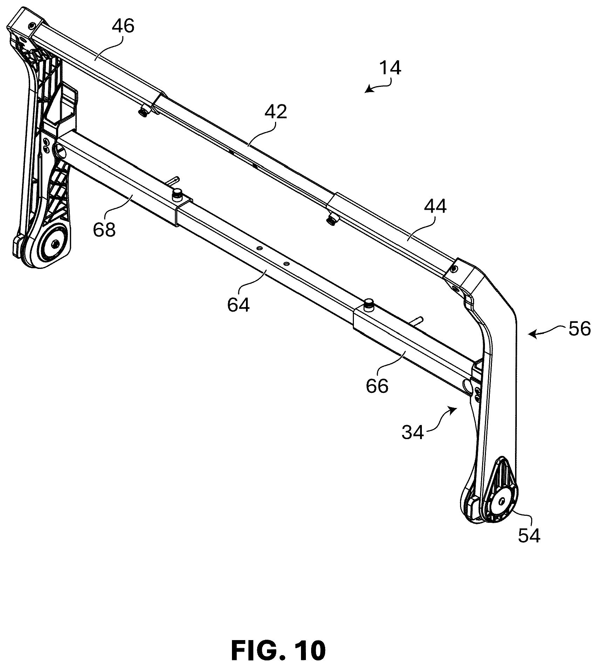

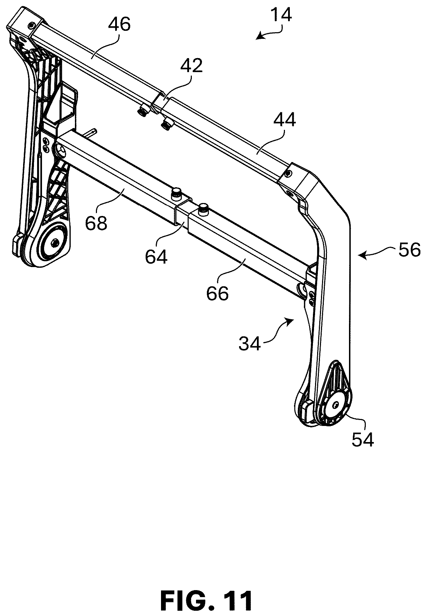

Referring to Figs. 9 to 11, a further embodiment of a frame according to embodiments of the present disclosure is shown. The principles of operation of the frame shown in Figs. 9 to 11 are the same as the principles of operation of the frame shown in Fig. 1 to 8. Therefore, the above description applies *mutatis mutandis* to the frame of Fig. 9 to 11. Like elements are given like numerals.

What has been described is merely illustrative of the application of principles of embodiments of the present disclosure. Other embodiments are also within the present disclosure, such as any and all methods related to the manufacture, provision, use and operation of the embodiments described herein.

## Claims

1. A bassinet for aircraft, the bassinet comprising:
a frame comprising:
a first frame component for connecting to an interior wall of the aircraft, and
a second frame component movably connected to the first frame component for moving the second frame component between a folded position proximal to the first frame component and a deployed position distal from the first frame component,
wherein the second frame component includes one or more portions that, when the second frame component is in the deployed position, are substantially at a same level as one or more portions of the first frame component with respect to a floor of the aircraft; and
a basket for connecting to the first and second frame components.

2. The bassinet of claim 1, wherein each of the first and second frame components has an adjustable portion extending in a first direction generally parallel to the wall of the aircraft following installation of the bassinet, wherein each of the first and second frame components is configured to allow its respective adjustable portion to be shortened.

3. The bassinet of claim 2, wherein the adjustable portion of each frame component includes a central bar and end bars at either end of the central bar, the end bars being slidingly engaged with the central bar.

4. The bassinet of claim 3, wherein the central bar is at least partially received within each of the end bars when the respective adjustable portion is shortened.

5. The bassinet of claim 2, wherein the basket is connected to the respective adjustable portions of the first and second frame components.

6. The bassinet of claim 1, wherein the basket is connected to at least the one or more portions of the first and second frame components that are substantially at the same level in the deployed position.

7. The bassinet of claim 1, wherein the second frame component is hingedly connected to the first frame component.

8. The bassinet of claim 1, wherein the second frame component comprises two arms, each of the arms hingedly connected to the first frame component.

9. The bassinet of claim 8, wherein each of the arms comprises an angled portion and a horizontal portion, the horizontal portion being at substantially the same level as the one or more portions of the first frame component when the second frame component is in the deployed position.

10. The bassinet of claim 1, wherein a cross-bar extends between the one or more portions of the first frame component.

11. The bassinet of claim 1, wherein a cross-bar extends between the one or more portions of the second frame component.

12. The bassinet of claim 1, wherein the basket is collapsible.

13. The bassinet of claim 1, further comprising a canopy connectable to the first frame component.
